(19) Europäisches Patentamt
European Patent Office
Office européen des brevets

(11) **EP 2 802 685 B1**

(12) **FASCICULE DE BREVET EUROPEEN**

(45) Date de publication et mention de la délivrance du brevet:
**23.03.2016 Bulletin 2016/12**

(21) Numéro de dépôt: **13700096.4**

(22) Date de dépôt: **09.01.2013**

(51) Int Cl.:
*C25B 1/04* (2006.01)    *C25B 9/18* (2006.01)
*C25B 15/02* (2006.01)    *H01M 8/04* (2006.01)
*C25B 9/00* (2006.01)    *H01M 8/24* (2006.01)

(86) Numéro de dépôt international:
**PCT/EP2013/050299**

(87) Numéro de publication internationale:
**WO 2013/104667 (18.07.2013 Gazette 2013/29)**

(54) **INSTALLATION D'ELECTROLYSE DE VAPEUR D'EAU A HAUTE TEMPERATURE (EVHT) A PRODUCTION ALLOTHERMIQUE D'HYDROGENE**

**HOCHTEMPERATUR-DAMPFELEKTROLYSEANLAGE MIT ALLOTHERMISCHER WASSERSTOFFERZEUGUNG**

**HIGH-TEMPERATURE STEAM ELECTROLYSIS FACILITY WITH ALLOTHERMAL HYDROGEN PRODUCTION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.01.2012 FR 1250210**

(43) Date de publication de la demande:
**19.11.2014 Bulletin 2014/47**

(73) Titulaire: **Commissariat à l'Énergie Atomique et aux Énergies Alternatives 75015 Paris (FR)**

(72) Inventeur: **BERTIER, Luc
F-69009 Lyon (FR)**

(74) Mandataire: **Brevalex
95, rue d'Amsterdam
75378 Paris Cedex 8 (FR)**

(56) Documents cités:
EP-A2- 0 450 336      WO-A2-2009/040335
DE-A1-102006 049 252      US-A- 4 721 556
US-A- 5 330 858      US-A1- 2003 235 733
US-A1- 2004 229 099

• **G.K. HOUSLEY, J.E. O'BRIEN, G.L. HAWKES: "Design of a compact heat exchanger for heat recuperation from a high temperature electrolysis system", 2008 INTERNATIONAL MECHANICAL ENGINEERING CONGRESS AND EXPOSITION, 31 octobre 2008 (2008-10-31), XP009162790,**
• **SIGURVINSSON J ET AL: "Heat transfer problems for the production of hydrogen from geothermal energy", ENERGY CONVERSION AND MANAGEMENT, ELSEVIER SCIENCE PUBLISHERS, OXFORD, GB, vol. 47, no. 20, 22 mai 2006 (2006-05-22), pages 3543-3551, XP027957068, ISSN: 0196-8904 [extrait le 2006-12-01]**
• **GOPALAN S ET AL: "Analysis of self-sustaining recuperative solid oxide electrolysis systems", JOURNAL OF POWER SOURCES, ELSEVIER SA, CH, vol. 185, no. 2, 19 septembre 2008 (2008-09-19), pages 1328-1333, XP025672777, ISSN: 0378-7753, DOI: 10.1016/J.JPOWSOUR.2008.09.027 [extrait le 2008-09-19]**

EP 2 802 685 B1

• ELDER R ET AL: "Nuclear heat for hydrogen production: Coupling a very high/high temperature reactor to a hydrogen production plant", PROGRESS IN NUCLEAR ENERGY, PERGAMON PRESS, OXFORD, GB, vol. 51, no. 3, avril 2009 (2009-04), pages 500-525, XP025988507, ISSN: 0149-1970, DOI: 10.1016/J.PNUCENE.2008.11.001 [extrait le 2009-02-24]

• RIVERA-TINOCO R ET AL: "Competitiveness of hydrogen production by High Temperature Electrolysis: Impact of the heat source and identification of key parameters to achieve low production costs", ENERGY CONVERSION AND MANAGEMENT, ELSEVIER SCIENCE PUBLISHERS, OXFORD, GB, vol. 51, no. 12, 23 juin 2010 (2010-06-23) , pages 2623-2634, XP027180918, ISSN: 0196-8904 [extrait le 2010-06-23]

**Description**

**DOMAINE TECHNIQUE**

L'invention concerne une installation d'électrolyse de vapeur d'eau à haute température (EVHT).

L'invention a trait plus particulièrement à une solution visant à optimiser la consommation électrique d'une telle installation lors de son fonctionnement pour produire de l'hydrogène.

L'installation comprend plusieurs réacteurs d'électrolyse ou autrement dit électrolyseurs de vapeur d'eau à haute température au moins en série fluidique les uns avec les autres.

On peut utiliser une installation EVHT selon l'invention pour réaliser la co-électrolyse de la vapeur d'eau $H_2O$ et de dioxyde de carbone $CO_2$.

Bien que décrite en référence à l'application EVHT, l'invention s'applique aussi à une installation de production d'électricité à piles à combustible (SOFC, abréviation en anglais de *Solid Oxyde Fuel Cell*).

Par « haute température », il faut comprendre dans le cadre de l'invention, des températures au moins égales à 450°C, typiquement comprises entre 700°C et 1000°C.

**ART ANTÉRIEUR**

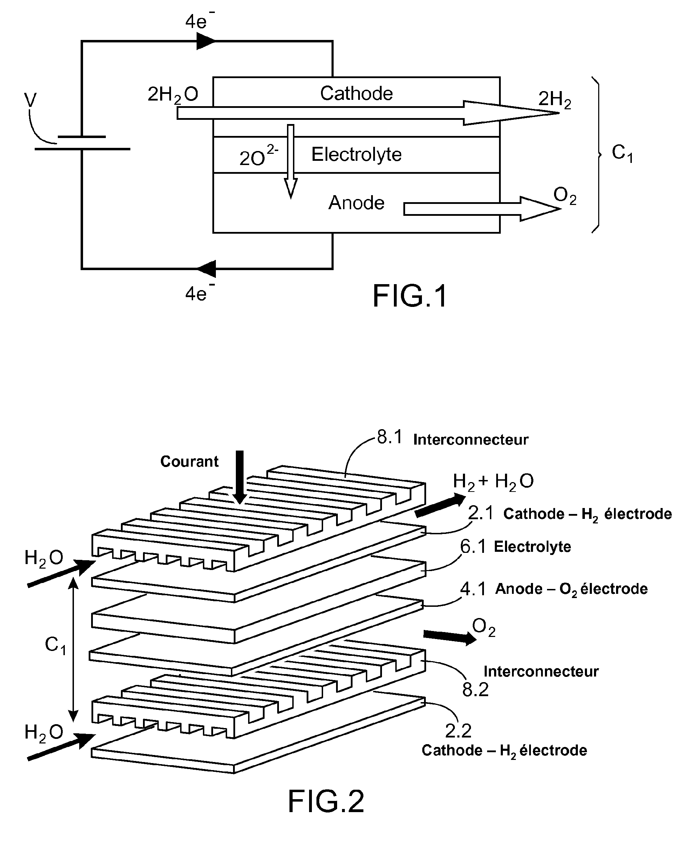

Le fonctionnement d'un électrolyseur de la vapeur d'eau à haute température (EVHT) est connu: il permet de réaliser la dissociation de la molécule d'eau en hydrogène et en oxygène par la combinaison de deux demi-réactions au niveau des deux électrodes (cathode / anode). Compte tenu de la température très élevée de ce procédé (entre 700 et 1000°C), l'électrolyte, l'anode et la cathode sont réalisés avec des matériaux céramiques. Ces matériaux peuvent varier selon les cellules d'électrolyse élémentaires considérées. On a représenté sur la figure 1, le schéma de principe de fonctionnement d'une cellule élémentaire d'électrolyse C1 d'un électrolyseur EVHT, réactions ayant lieu à l'anode et à la cathode lors de l'électrolyse de l'eau.

Du côté de la cathode, la vapeur d'eau est introduite en entrée et une réaction de réduction électrochimique conduit à la formation d'hydrogène :

$$H_2O + 2e^- \rightarrow H_2 + O^{2-} \text{. (1)}$$

Il y a alors production d'hydrogène.

A l'anode, les anions $O^{2-}$ migrant depuis la cathode à travers la membrane électrolyte, sous l'effet du champ électrique créé par une différence de potentiel imposée entre l'anode et la cathode, sont oxydés en dioxygène et la réaction d'oxydation suivante a lieu:

$$2O^{2-} \rightarrow O_2 + 4e^- \text{. (2)}$$

Il y a alors production d'oxygène.

Sur la figure 1, seule la source de tension V apte à appliquer une tension aux bornes de la cellule élémentaire C1 est représentée. Une source de vapeur d'eau non représentée amène la vapeur d'eau à la cathode et éventuellement une source de gaz neutre également non représentée amène le cas échéant un gaz de balayage (air, azote ou vapeur d'eau) aussi appelé gaz drainant du côté de l'anode pour faciliter l'évacuation de l'oxygène et de la chaleur.

Fonctionnellement, une cellule élémentaire d'électrolyse, ses deux demi-interconnecteurs destinés chacun à assurer les distributions fluidique et électrique sur la cellule, associés à un système d'étanchéité forment une unité élémentaire d'un réacteur d'électrolyse que l'on désigne usuellement sous l'appellation de SRU (abréviation en anglais Single Repeat Unit). On a représenté en figure 2 une partie d'une telle unité SRU avec sa cellule C1 élémentaire d'électrolyse et ses deux demi-interconnecteurs 8.1, 8.2. La nature et le sens de circulation des fluides considérés sont également indiquée ainsi que le sens du courant électrique appliqué. Pour réaliser un réacteur d'électrolyse complet, on forme un empilement, aussi appelé « stack », d'une pluralité de cellules élémentaires, typiquement d'un nombre de l'ordre de 30 à 100. Un empilement ou stack est finalement assemblé entre deux plaques terminales maintenues en compression l'une contre l'autre par un système ad'hoc. Un module d'électrolyse est ensuite constitué de plusieurs empilements réalisés comme ci-dessus placés dans une même enceinte isolée thermiquement. La capacité de production voulue d'une installation d'électrolyse est ainsi prévue en installant un nombre idoine de modules d'électrolyse.

Un empilement d'électrolyseurs ou stack est donc composé de SRU empilés les uns sur les autres, connectés électriquement en série et fluidiquement en parallèle. Autrement dit, un réacteur d'électrolyse de vapeur d'eau à haute température (EVHT) comporte une pluralité de cellules élémentaires formées par une cathode et une anode séparées par un électrolyte, les cellules élémentaires étant raccordées électriquement en série au moyen de plaques interconnectrices interposées, en général, entre une anode d'une cellule élémentaire et une cathode de la cellule élémentaire suivante. Une connexion anode-anode suivie par une connexion cathode-cathode est également possible. Les plaques interconnectrices sont des composants conducteurs électroniques formés par une plaque métallique. Ces plaques assurent par ailleurs la séparation entre le fluide cathodique circulant au niveau d'une cellule élémentaire du fluide anodique circulant dans une cellule élémentaire suivante.

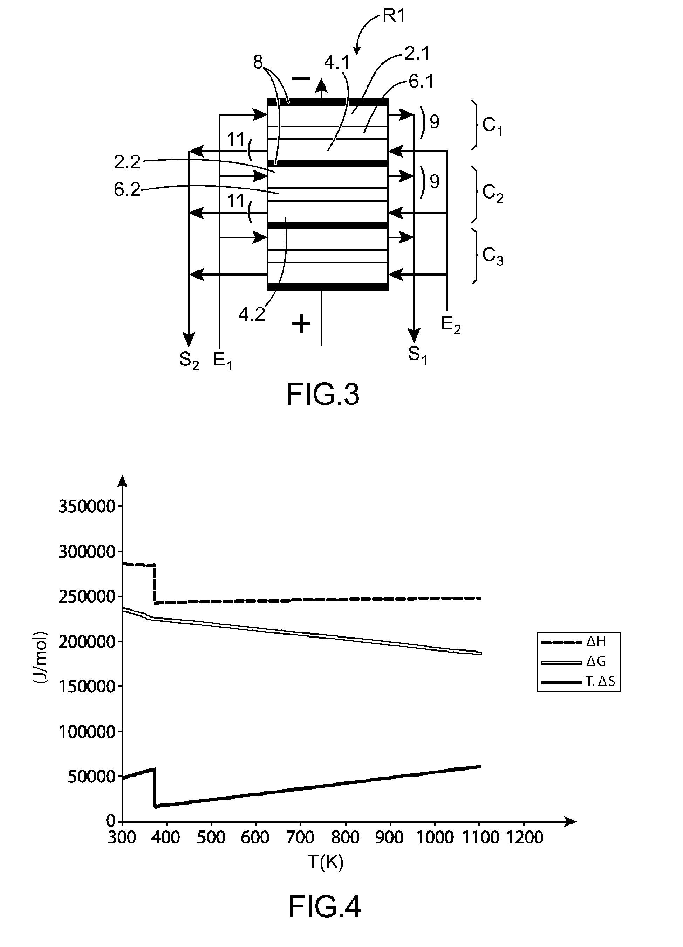

Sur la figure 3, on a représenté schématiquement un exemple de réalisation d'un électrolyseur EHT haute température. L'électrolyseur comporte un empilement d'une pluralité de cellules élémentaires C1, C2, C3... empilées les unes sur les autres.

Chaque cellule élémentaire comporte un électrolyte intercalé entre une cathode et une anode. Par souci de clarté, nous ne décrivons en détail que les cellules C1 et C2 et leur interface, le reste de l'empilement étant réalisé de la même manière.

La cellule C1 comporte une cathode 2.1 et une anode 4.1 entre lesquelles est intercalé un électrolyte 6.1.

La cellule C2 comporte une cathode 2.2 et une anode 4.2 entre lesquelles est intercalé un électrolyte 6.2.

L'anode 4.1 de la cellule C1 est reliée électriquement à la cathode 2.2 de la cellule C2 par une plaque interconnectrice 8 venant en contact avec l'anode 4.1 et la cathode 2.2. Par ailleurs, elle permet l'alimentation électrique de l'anode 4.1 et de l'anode 4.2.

Une plaque interconnectrice 8 est interposée entre deux cellules élémentaires. Dans l'exemple représenté, elle est interposée entre une anode d'une cellule élémentaire et la cathode de la cellule adjacente. Mais on pourrait prévoir qu'elle soit interposée entre deux anodes ou deux cathodes.

La plaque interconnectrice 8 définit avec l'anode et la cathode adjacentes des canaux pour la circulation de fluides. Ils définissent des compartiments anodiques 9 dédiés chacun à la circulation des gaz au niveau des anodes et des compartiments cathodiques 11 dédiés chacun à la circulation des gaz au niveau des cathodes.

Comme illustré, cet électrolyseur comprend une entrée d'alimentation unique E1 pour les compartiments cathodiques 9 et une sortie d'évacuation unique S1 pour l'hydrogène produit dans les compartiments cathodiques 9. De même, il est prévu une entrée d'alimentation unique E2 de gaz drainant (air par exemple) pour les compartiments anodiques 11 et une sortie d'évacuation unique S2 pour l'oxygène produit dans ces compartiments anodiques 11. L'électrolyseur est donc alimenté en vapeur d'eau à l'entrée unique E1 et la température de fonctionnement d'un tel électrolyseur est comprise entre 700°C et 1000°C. Comme représenté sur cette figure 3, l'électrolyseur EVHT est alimenté par un courant électrique unique qui traverse l'empilement. Comme représenté également, on voit que le fluide (vapeur d'eau et hydrogène produit) circulant dans les compartiments cathodiques 9 circule à contre-courant du fluide (gaz drainant et oxygène produit) circulant dans les compartiments anodiques 11.

On va maintenant décrire plus en détail les modes de fonctionnement possibles d'un électrolyseur de vapeur d'eau à haute température.

La chaleur Q nécessaire à l'électrolyse d'eau à haute température est apportée d'une part pour vaporiser l'eau (à basse température ≈200°C) et d'autre part pour compenser l'endothermicité de la réaction, à haute température typiquement aux alentours de 800°C. On précise que la chaleur Q apporter pour compenser l'endothermicité de la réaction est égale au produit de la température T (K) et de la différence d'entropie ΔS (J/K), entre l'état d'avant la réaction (1 mole H2O) et après la réaction (1 mole H2 et une ½ mole O2), soit à Q=T* ΔS. A basse température, les irréversibilités imposent l'utilisation de l'énergie électrique seule.

En effet, selon la tension appliquée aux bornes d'une cellule élémentaire d'électrolyse, désignée par le symbole U, et pour une production donnée d'hydrogène à température et pression fixées, on peut fournir en complément de l'énergie électrique ($E_{el} = U \cdot 2F$) de l'énergie thermique Q définie par la relation :

$$Q = \Delta H - U \cdot 2F \text{ , (3)}$$

dans laquelle F est la constante de Faraday. On a représenté en figure 4, l'évolution des grandeurs thermodynamiques de l'eau en fonction de la température à une pression de l'ordre de 1 atmosphère par mole de vapeur d'eau transformée. On précise que sur cette figure 4, Q=T.ΔS est le produit de la température par la différence de d'entropie de la réaction, soit la part de l'énergie que l'on peut fournir sous forme de chaleur, ΔG est la différence d'enthalpie libre (ou énergie de Gibbs) de la réaction correspondant à l'énergie minimale à fournir sous forme électrique $E_{el,min} = \Delta G$, ΔH désigne la différence d'enthalpie de la réaction soit l'énergie totale à fournir $E_{tot} = \Delta H = \Delta G + T.\Delta S$ pour transformer une mole d'eau en hydrogène et oxygène tout en restant à température constante.

Ainsi, pour une tension électrique égale à $U_{th} = \Delta H / 2F$, on fournit par l'énergie électrique l'ensemble de l'énergie nécessaire : cette tension est usuellement désignée par la tension thermoneutre. En comparant la tension imposée à une cellule d'électrolyse élémentaire à cette tension thermoneutre $U_{th}$ on définit usuellement les trois modes de fonctionnement suivants :

- mode allothermique selon lequel $U<U_{th}$.: la réaction consomme plus de chaleur que les pertes électriques n'en produisent, la consommation électrique est alors faible mais la densité de courant ($A/m^2$) l'est également. De plus, il faut pouvoir apporter de la chaleur à haute température par une source externe à l'électrolyseur à haute température afin de compenser ce manque;
- mode autothermique selon lequel $U=U_{th}$: la chaleur consommée est exactement compensée par les irréversibilités. On a alors une densité de courant moyenne et l'on s'affranchit du problème de la source de chaleur externe à l'électrolyseur.
- mode exothermique selon lequel $U>U_{th}$: les irréversibilités dégagent plus de chaleur que ce que la réaction n'en consomme. On produit alors de la chaleur excédentaire mais en contrepartie on peut obtenir des densités de courant élevées.

Afin de comparer les coûts relatifs des deux sources d'énergie (chaleur et électricité), on exprime le coût exergétique Ex par la relation suivante:

$$Ex = UI + \eta_{carnot} Q \quad (4)$$

dans laquelle U et I désignent respectivement la tension et l'intensité du courant appliqués, $\eta_{carnot} = 1 - \dfrac{T_0}{T}$ désigne le rendement de Carnot, avec $T_0$ la température extérieure et Q la chaleur apportée.

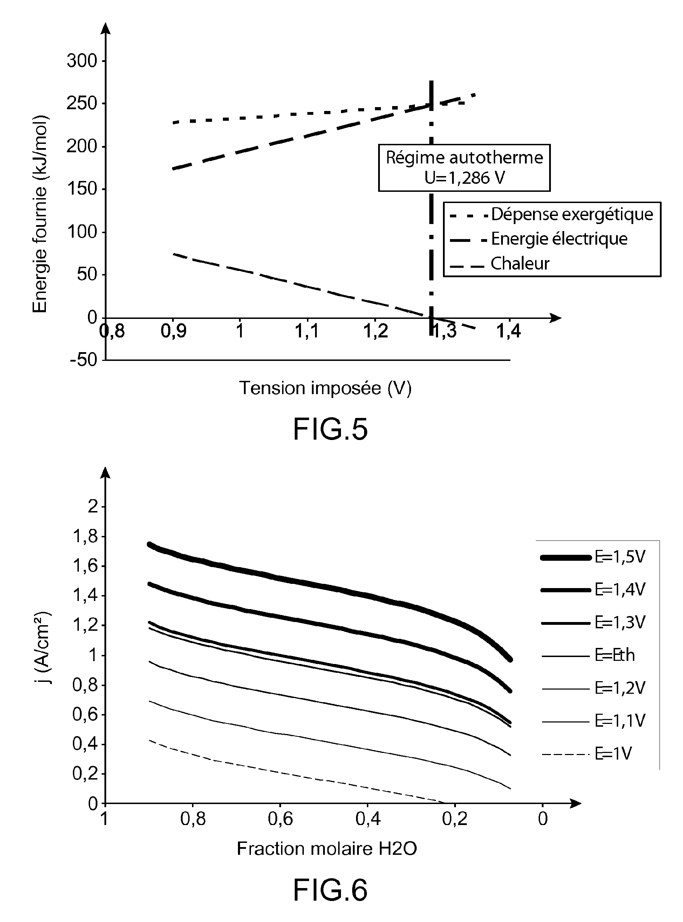

De cette relation (4), on peut voir l'impact de la tension imposée sur le coût exergétique de la réaction. On a représenté schématiquement en figure 5 respectivement l'énergie électrique EI, la chaleur et la dépense exergétique Ex en fonction de la tension imposée, et ce pour une pression de 1 atmosphère et à une température de 1072 degré Kelvin (K). On voit donc que pour diminuer la dépense exergétique Ex, il est plus intéressant de fonctionner en mode allothermique dans le cas où l'on dispose d'une source chaude externe à haute température.

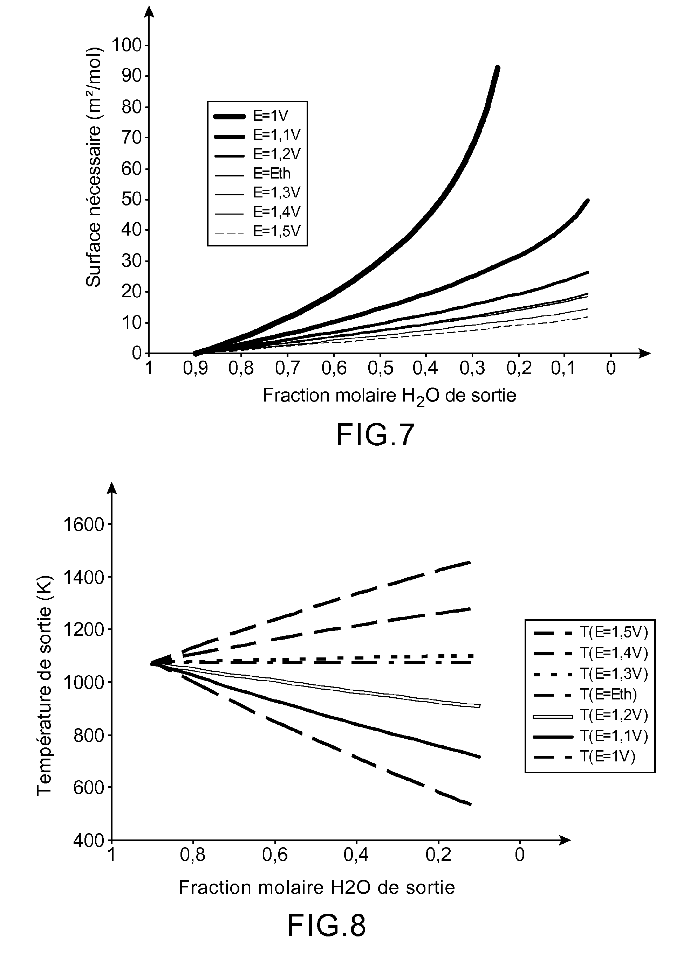

Malheureusement, la densité de courant en mode allothermique est bien plus faible qu'en mode exothermique : cela ressort de la figure 6 qui illustre la densité de courant dans un électrolyseur EVHT en fonction de différents niveaux de tension appliquée et de la fraction de vapeur d'eau souhaitée en sortie d'électrolyseur EVHT, c'est-à-dire en fonction du taux de conversion en hydrogène souhaité en sortie. Typiquement, comme cela ressort de la figure 6, pour une tension imposée de 1V, il s'avère impossible d'obtenir une fraction molaire de vapeur d'eau inférieure à 0,2. Une densité de courant plus faible se traduit donc, pour une surface donnée, à une fraction molaire de sortie moindre, ce qui nuit au rendement global. A fraction molaire de sortie fixée, la baisse de densité de courant se traduit par une augmentation de la surface de réaction nécessaire, soit un investissement plus important. La figure 7 illustre bien cette conséquence : dans cette figure 7, on a représenté le profil de la surface spécifique de réaction nécessaire en $m^2/mol$ pour une mole de mélange d'entrée en fonction de la fraction molaire de sortie souhaité et selon le niveau de tension appliqué et ce à une pression égale à 1 atm et une température de l'ordre de 1072K. On précise ici qu'une mole de mélange d'entrée est composée de 0,9 mol de vapeur d'eau et de 0.1 mol d'hydrogène. On précise également que ces valeurs dépendent de la technologie utilisée pour une unité élémentaire d'électrolyse de la vapeur d'eau à haute température dite SRU (abréviation Single Repeat Unit), ces courbes de densité de courant comme les surfaces correspondantes ne montrant en fait que les tendances d'évolution.

Ces fortes différences de densité de courant font qu'un électrolyseur EVHT fonctionnant en mode allothermique nécessite une surface de réaction bien plus grande. Or, un électrolyseur EVHT est intrinsèquement un objet coûteux : aussi, les inventeurs considèrent que raisonnablement il n'est pas envisageable d'avoir une surface active de $40m^2$ d'électrolyseur pour produire une mole d'hydrogène. Aussi, il faut trouver un compromis entre surface active d'électrolyseur EVHT et efficacité énergétique.

Actuellement, deux catégories de solutions existent. La première est la catégorie de solution la plus souvent rencontrée dans les publications, consiste à faire fonctionner les électrolyseurs EVHT en mode autothermique dans lequel la température est par définition constante. Aucun apport d'une source externe de chaleur à haute température n'est nécessaire et l'on peut donc réaliser l'ensemble de la conversion de l'eau en hydrogène dans un seul empilement ou stack. Autrement dit, un électrolyseur EVHT avec un seul empilement de grande surface fonctionnant en mode autothermique est suffisant. Par contre, ce mode de fonctionnement est coûteux en énergie électrique et n'est donc pas très performant au final en termes de dépense exergétique.

Dans le cas où l'on ne dispose pas de source de chaleur à haute température, ou que l'on ne peut pas apporter ou évacuer la chaleur directement dans l'électrolyseur, les fonctionnements en mode allothermique et en mode exothermique impliquent une forte variation de la température le long de chaque cellule élémentaire d'électrolyse, ce qui met en danger son intégrité mécanique. Par exemple, pour une cellule alimentée en co-courant (compartiments anodiques et cathodiques balayés chacun par un fluide circulant dans le même sens) et dont l'anode est balayée initialement avec un débit molaire égal à celui de la cathode et une température d'entrée de 1072 K, on obtient les températures indiquées sur la figue 8. Aussi, une seule cellule ne pouvant généralement pas supporter une différence de température importante, par expérience de plus de 50 K voire 100 K maximum, il est impossible de fonctionner en mode fortement allothermique en une seule étape.

Or, comme indiqué précédemment, un fonctionnement en mode allothermique peut permettre d'importantes économies d'énergie électrique, mais en contrepartie il est nécessaire de gérer le gradient de température dans chaque cellule afin d'éviter sa rupture.

La deuxième catégorie de solution connue pour permettre un fonctionnement allothermique consiste alors à intégrer des échangeurs de chaleur au sein même de l'empilement de cellules élémentaires d'électrolyse, afin d'apporter directement la chaleur dans l'électrolyseur pour compenser l'endothermicité de la réaction. Une solution avantageuse de cette deuxième catégorie est décrite et revendiquée par la demanderesse dans la demande de brevet WO2009/040335. Une solution similaire pour une SOFC est décrite dans la demande de brevet US2004/0229099. Cette solution est également schématisée en figure 9 sur laquelle on voit un échangeur de chaleur intégré entre deux cellules élémentaires adjacentes C2, C3 et dont le circuit de fluide primaire 7 est relié à une entrée d'alimentation E3 de fluide caloporteur qui apporte la chaleur aux différentes cellules C2, C3 directement en contact (symbolisée par la série de petites flèches) et avec les autres avant de sortir par la sortie S3.

Cette solution d'intégration d'échangeurs de chaleur au sein d'un empilement de cellules d'électrolyse élémentaires a comme avantages importants d'une part de permettre un fonctionnement en mode fortement allothermique, c'est-à-dire avec une consommation électrique bien faible (U«Uth), et d'autre part de permettre de rester à la température maximale tout au long de la réaction (densité de courant plus élevée), c'est-à-dire tout le long de chaque cellule élémentaire. Cette solution présente néanmoins les inconvénients suivants:

- une grande quantité d'échangeurs thermiques de petite taille (conditionnée par la taille des cellules d'électrolyse) est nécessaire, ce qui se traduit par un coût d'investissement très élevé ;
- les cellules ayant une durée de vie limitée, il est nécessaire de changer régulièrement l'ensemble de l'empilement, avec les échangeurs de chaleur internes intégrés, ce qui se traduit par un surcoût important de maintenance et un grand nombre de connexions fluidiques et électriques à réaliser.
- les échangeurs de chaleur doivent être alimentés par un fluide caloporteur qui doit circuler dans les multiples échangeurs internes 7, et donc avec les pertes de charges afférentes.

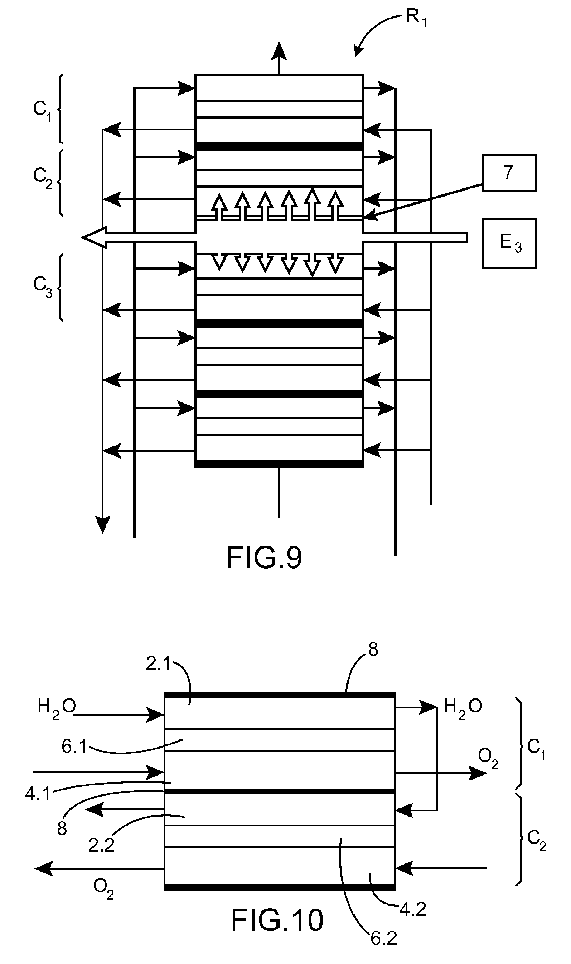

La demande de brevet WO 2011/003519 A1 a proposé une autre solution qui consiste à lisser le profil thermique au sein des cellules d'électrolyse tout en augmentant le taux d'utilisation de la vapeur d'eau (taux de conversion) en mettant en communication fluidique les compartiments cathodiques de différentes cellules entre eux à l'intérieur d'un même empilement. Un exemple de cette solution est schématiquement représenté en figure 10 : la vapeur d'eau non complètement convertie ainsi que l'hydrogène produit en sortie de cathode 2.1 de la première cellule d'électrolyse C1 est réinjectée en entrée de cathode 2.2 de la deuxième cellule C2, adjacente à la première cellule C1. La circulation du gaz drainant et de l'oxygène produit à chaque anode 4.1 respectivement 4.2 est en co-courant avec la circulation de la vapeur d'eau introduite avec l'hydrogène produit à chaque cathode 2.1, respectivement 2.2.

Le but de l'invention est de proposer une solution qui pallie tout ou partie des inconvénients de l'art antérieur précité et qui permette de faire fonctionner une installation d'électrolyse de vapeur d'eau à haute température (EVHT) selon un mode fortement allothermique et avec un taux d'utilisation de la vapeur d'eau élevé.

Un but particulier de l'invention est de proposer une solution d'installation d'électrolyse de vapeur d'eau à haute température (EVHT) qui permette d'éviter l'intégration d'échangeurs thermiques au sein même d'empilement de cellules d'électrolyse élémentaires afin d'obtenir des coûts d'investissement et de maintenance moindres.

## EXPOSÉ DE L'INVENTION

Pour ce faire, l'invention a pour objet une installation d'électrolyse de vapeur d'eau à haute température (EVHT) ou de production d'électricité à pile à combustible (SOFC), comprenant au moins deux réacteurs électrochimiques, dans laquelle chaque réacteur électrochimique comporte au moins une cellule d'électrochimique élémentaire, chaque cellule étant constituée d'une cathode, d'une anode et d'un électrolyte intercalé entre la cathode et l'anode, au moins un élément connecteur comportant au moins un compartiment pour la circulation de gaz à la cathode, étant agencé en contact électrique avec la cathode d'une cellule élémentaire et, au moins un élément connecteur comportant au moins un compartiment pour la circulation de gaz à l'anode étant agencé en contact électrique avec l'anode d'une cellule élémentaire.

Des moyens relient les deux réacteurs électrochimiques fluidiquement en série l'un à l'autre, ces moyens comportent par exemple au moins un compartiment de circulation de gaz.

Selon l'invention, l'installation comporte au moins un échangeur de chaleur dont l'un des circuits est relié fluidiquement en série à la sortie d'un des compartiments de circulation de gaz d'un des deux réacteurs et à l'entrée d'un des compartiments de circulation de gaz de l'autre des deux réacteurs ; l'autre circuit de l'échangeur est relié fluidiquement à une source de chaleur externe aux réacteurs.

Ainsi grâce à l'invention, on peut faire fonctionner l'installation d'électrolyse EHVT en mode fortement allothermique avec un taux d'utilisation élevé (taux de conversion de vapeur d'eau élevé). Contrairement à la solution selon l'état de l'art qui consiste à intégrer des échangeurs de chaleur au sein même d'empilements de cellules d'électrolyse, on peut réaliser des réacteurs d'électrolyse usuels et donc avoir des coûts d'investissement et de maintenance moindres.

Ainsi, au contraire des réacteurs d'électrolyse à empilement de cellules élémentaires comme proposé selon l'état de l'art, on peut s'affranchir de la nécessité de réaliser des empilements avec cellules élémentaires de grande taille dans lesquels on recherche systématiquement un taux de conversion de la vapeur d'eau maximal par empilement (taux de conversion en final proche de 100%). Selon l'invention, on peut ainsi réaliser un assemblage d'empilements de cellules d'électrolyse EVHT de petite taille dans chacun desquels seule une petite partie de la conversion est réalisée.

On précise ici qu'on entend par « taux de conversion de vapeur d'eau », le rapport entre débit de vapeur d'eau $H_2O$ converti en hydrogène à la sortie d'un réacteur d'électrolyse et celui en entrée dans ce réacteur d'électrolyse.

Autrement dit, on peut réaliser dans chaque réacteur d'électrolyse à empilement donné de l'installation un faible taux de conversion de la vapeur d'eau tout en fonctionnant en mode fortement allothermique, puis on amène, entre deux réacteurs consécutifs, de la chaleur à la vapeur d'eau en partie convertie grâce à des échangeurs de chaleur externes, l'enchainement de conversion des vapeurs d'eau déjà convertie en partie réalisant au final, c'est-à-dire en sortie d'installation, un taux de conversion élevé de vapeur d'eau.

En outre, l'utilisation d'empilements (stacks) de cellules d'électrolyse de petite taille peut avoir de nombreux avantages que l'on peut énumérer comme suit:

- permettre un fonctionnement de chaque empilement sous une tension électrique différente, plus adaptée à la composition du mélange fluidique;
- permettre un fonctionnement plus allothermique que sur un empilement de grande taille tout en respectant la contrainte de gradient de température maximale acceptable pour une cellule, admis généralement égal à 50 K;
- permettre une moindre maintenance par un changement nécessaire moindre des empilements. En effet, des cellules d'électrolyse ne vieillissent pas à la même vitesse selon leur utilisation. Une cellule d'électrolyse résiste moins longtemps lorsqu'elle subit une tension électrique élevée et une teneur faible en vapeur d'eau. Ainsi, contrairement à un empilement de grande taille selon l'état de l'art qu'il est nécessaire de changer à cause de l'usure des cellules due à la faible teneur en eau en fin de conversion, c'est-à-dire le long d'une faible partie de la cellule, on peut grâce à l'invention ne changer qu'un seul empilement de cellules d'électrolyse, celui en fin de série fluidique de l'installation dans lequel la teneur en vapeur d'eau est nécessairement faible (fin de conversion).

De préférence, chaque réacteur comprend un empilement d'une pluralité de cellules électrochimiques élémentaires, une plaque interconnectrice étant agencée entre deux cellules élémentaires adjacentes et en contact électrique avec une électrode d'une des deux cellules élémentaires et une électrode de l'autre des deux cellules élémentaires, la plaque interconnectrice comportant au moins un compartiment cathodique et au moins un compartiment anodique pour la circulation de gaz respectivement à la cathode et l'anode.

Selon un mode de réalisation, chaque échangeur de chaleur est relié fluidiquement en série à la sortie à la fois des deux compartiments de circulation de gaz d'un deux réacteurs et à l'entrée des deux compartiments de circulation de gaz de l'autre des deux réacteurs.

Alternativement, selon un autre mode de réalisation, chaque échangeur de chaleur est relié fluidiquement en série à la sortie d'un seul des deux compartiments de circulation de gaz d'un deux réacteurs et à l'entrée d'un seul des compartiments de circulation de gaz de l'autre des deux réacteurs, la sortie de l'autre des compartiments de chaque réacteur étant relié à un circuit indépendant.

On peut prévoir en outre au moins, dans la partie aval de l'installation, deux réacteurs reliés fluidiquement en parallèle l'un avec l'autre.

L'invention concerne également un procédé d'électrolyse de vapeur d'eau, à haute température, mis en oeuvre par une installation telle que celle qui vient d'être décrite, selon lequel on réalise au moins les étapes suivantes :

a/ fonctionnement en mode allothermique au moins dans un des réacteur d'électrolyse, de préférence en amont, ou le ou les plus en amont, de l'installation, avec un gradient de température entre une entrée et une sortie fluidique d'un au moins desdits réacteurs limité à une valeur prédéterminée $\Delta T$;

b/ génération de chaleur par la source de chaleur externe pour apporter une augmentation de température de l'ordre de la valeur prédéterminée ΔT au moins au fluide sortant du (des) compartiment(s) cathodique(s) d'un réacteur en amont avant son introduction dans ceux du réacteur en série en aval.

La valeur de gradient thermique ΔT prédéterminée selon l'étape a/ est de préférence au plus égale à 100K, de préférence à 50K.

Selon une caractéristique avantageuse, l'étape a/ est réalisée de sorte à avoir tous les réacteurs d'électrolyse en fonctionnement en mode allothermique. De manière alternative, l'étape a/ est réalisée de sorte à avoir une partie des réacteurs, de préférence en aval ou le ou les plus en aval, en fonctionnement en mode autothermique.

Selon un mode de réalisation, on réalise dans chaque réacteur d'électrolyse une circulation de fluide ($H_2O$, $H_2$) dans les compartiments cathodiques en co-courant avec celle du fluide ($0_2$, gaz drainant) dans les compartiments anodiques.

Selon un autre mode de réalisation, on réalise dans chaque réacteur d'électrolyse une circulation de fluide ($H_2O$, $H_2$) dans les compartiments cathodiques en contre-courant avec celle du fluide ($0_2$, gaz drainant) dans les compartiments anodiques.

Selon un autre mode de réalisation encore, on réalise dans chaque réacteur d'électrolyse une circulation de fluide ($H_2O$, $H_2$) dans les compartiments cathodiques en courant-croisé avec celle du fluide ($0_2$, gaz drainant) dans les compartiments anodiques.

On peut réaliser en outre dans chaque réacteur d'électrolyse une circulation de fluide ($H_2O$, $H_2$) en co-courant avec celle du fluide ($0_2$, gaz drainant) entre réacteurs consécutifs. De manière alternative, on peut réaliser en outre dans chaque réacteur d'électrolyse une circulation de fluide ($H_2O$, $H_2$) en contre-courant avec celle du fluide ($0_2$, gaz drainant) entre réacteurs consécutifs.

Selon une variante avantageuse, on réalise l'évacuation de l'oxygène produit par chaque réacteur d'électrolyse.

## BRÈVE DESCRIPTION DES DESSINS

D'autres avantages et caractéristiques de l'invention ressortiront mieux à la lecture de la description détaillée de l'invention faite à titre illustratif et non limitatif en référence aux figures suivantes parmi lesquelles :

- la figure 1 est une représentation schématique du principe de fonctionnement de l'électrolyse de la vapeur d'eau à haute température selon l'état de l'art,
- la figure 2 est une vue en perspective d'une unité élémentaire d'électrolyse de la vapeur d'eau à haute température dite SRU (abréviation Single Repeat Unit) selon l'état de l'art montrant les circulations fluidique et électrique en son sein,
- la figure 3 est une vue schématique en coupe longitudinale d'un réacteur d'électrolyseur de vapeur d'eau à haute température (EVHT) de type à empilement de cellules d'électrolyse élémentaires selon l'état de l'art,
- la figure 4 illustre des courbes d'évolution des grandeurs thermodynamiques dans une réaction d'électrolyse de vapeur d'eau à haute température (EVHT) en fonction de la température et à une pression de 1 atm,
- la figure 5 illustre des courbes d'évolution respectivement de la dépense exergétique, de l'énergie électrique et de la chaleur dans une réaction d'électrolyse de vapeur d'eau à haute température (EVHT) en fonction de la tension électrique imposée et à une pression de 1 atm et une température de 1072K,
- la figure 6 illustre des courbes d'évolution de la densité de courant dans une réaction d'électrolyse de vapeur d'eau à haute température (EVHT) en fonction de la tension électrique imposée et de la fraction d'eau en sortie souhaitée et à une pression de 1 atm et une température de 1072K,
- la figure 7 illustre des courbes d'évolution de surface spécifique de réaction d'électrolyse de vapeur d'eau à haute température (EVHT), pour une mole de mélange en fonction de la fraction d'eau en sortie souhaitée et à une pression de 1 atm et une température de 1072K,
- la figure 8 illustre des courbes d'évolution du profil de température dans une réaction d'électrolyse de vapeur d'eau à haute température (EVHT) en fonction de la fraction d'eau en sortie souhaitée et du mode de fonctionnement avec ou non chaleur apportée,
- la figure 9 est une vue schématique illustrant le principe de fonctionnement d'un réacteur d'électrolyse à empilement avec échangeur thermique intégré au sein de l'empilement selon l'état de l'art,
- la figure 10 est une vue schématique illustrant le principe de fonctionnement d'un réacteur d'électrolyse à empilement selon la demande de brevet WO 2011/003519 A1,
- la figure 11 est une vue schématique illustrant le principe de fonctionnement d'une installation d'électrolyse à vapeur d'eau selon un mode de l'invention avec deux réacteurs à empilement de cellules d'électrolyse en série fluidique l'un avec l'autre,
- la figure 12 illustre les courbes de deux profils thermiques de deux installations d'électrolyse selon un mode de l'invention avec trois réacteurs à empilement de cellules d'électrolyse en série fluidique l'un avec l'autre, une des installations étant utilisée avec des taux de conversion d'eau d'un réacteur d'électrolyse à l'autre différent par rapport à l'autre installation,

- la figure 13 est une vue schématique illustrant le principe de fonctionnement d'une installation d'électrolyse à vapeur d'eau selon un autre mode de l'invention avec trois réacteurs à empilement de cellules d'électrolyse en série fluidique l'un avec l'autre,
- la figure 14 illustre les courbes d'évolution de la tension électrique et du rendement exergétique en fonction en fonction du nombre de réacteur d'électrolyse dans l'installation,
- la figure 15 est une vue schématique illustrant le principe de fonctionnement d'une installation d'électrolyse à vapeur d'eau selon un autre mode de l'invention avec trois réacteurs à empilement de cellules d'électrolyse en série fluidique l'un avec l'autre,
- la figure 16 illustre les courbes d'évolution de la tension de Nernst et du produit de la capacité calorifique et du débit en fonction de la fraction molaire de vapeur d'eau $H_2O$ pour des installations d'électrolyse selon l'invention fonctionnant d'une part en co-courant et d'autre part en contre-courant,
- la figure 17 est une vue schématique illustrant le principe de fonctionnement d'une installation d'électrolyse à vapeur d'eau selon un autre mode de l'invention avec trois réacteurs à empilement de cellules d'électrolyse en série fluidique l'un avec l'autre,
- la figure 18 est une vue schématique illustrant une variante de la figure 17.

## EXPOSÉ DÉTAILLÉ DE MODES DE RÉALISATION PARTICULIERS

Les figures 1 à 10 qui se rapportent à l'électrolyse de vapeur d'eau (EVHT) selon l'état de l'art ont été décrites ci-dessus en détail. Elles ne sont donc pas commentées par la suite.

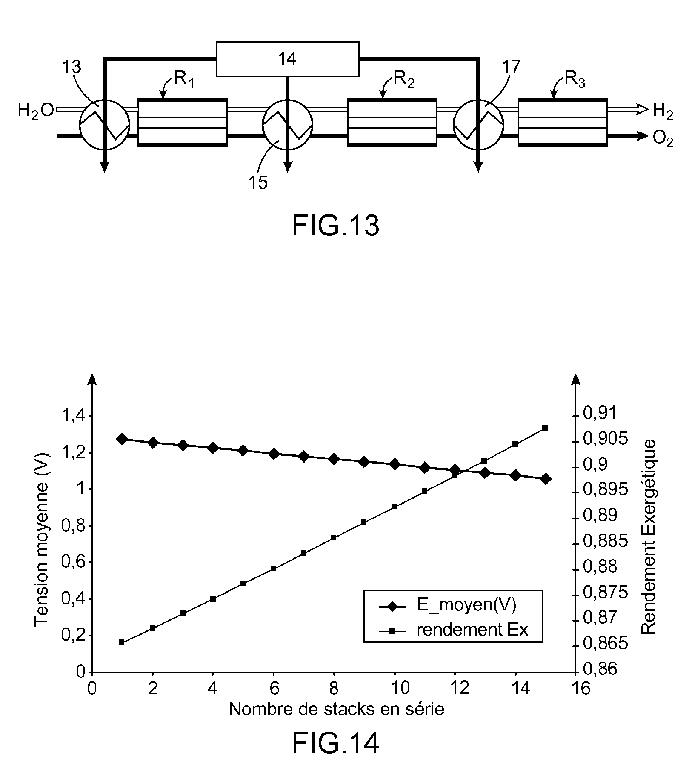

On décrit l'invention ci-après en relation avec un type d'architecture de réacteur d'électrolyse de vapeur d'eau à hautes températures R1 tel qu'il a été décrit en référence à la figure 3. En particulier, ce réacteur d'électrolyse R1 comprend une plaque interconnectrice 8 (de préférence une seule) entre deux cellules élémentaires C1, C2, cette plaque étant agencée en contact électrique avec l'anode 4.1 d'une cellule C1 et la cathode 2.2 de la cellule adjacente C2 dans l'empilement. Dans tous les modes de réalisation illustrés qui vont suivre, tous les réacteurs d'électrolyse R1, R2...Rn sont de préférence identiques et ne sont pas décrits plus en détail, seuls les connexions fluidiques et le sens des circulations des fluides sont décrits. D'ailleurs, à des fins de clarté, sur les figures 13, 15, 17 et 18 chaque réacteur R1, R2,...Rn est représenté avec une seule cellule d'électrolyse encadrée de part et d'autre par ses deux plaques connectrices d'extrémité, i.e. par lesquelles le courant électrique est alimenté et sort de l'empilement.

On précise que les termes « amont » et « aval » sont utilisés par référence avec le sens de circulation du fluide dans le compartiment considéré d'un réacteur d'électrolyse, c'est-à-dire soit le sens de circulation de la vapeur d'eau et de l'hydrogène produit aux cathodes dans les compartiments cathodiques d'un réacteur, soit le sens de circulation de l'oxygène produit aux anodes et le cas échéant du gaz drainant dans les compartiments anodiques d'un réacteur.

On précise que les termes « co-courant » et « contre-courant » sont utilisés par le sens relatif du fluide circulant dans un compartiment cathodique ou anodique par rapport à l'autre fluide circulant dans l'autre compartiment respectivement anodique ou cathodique. Ainsi, la vapeur d'eau circulant à la cathode est dite en co-courant avec l'oxygène produit à l'anode lorsque ils circulent dans le même sens de circulation depuis l'entrée jusqu'à la sortie de leur compartiment respectif. De même, la vapeur d'eau circulant à la cathode est dite en contre courant avec l'oxygène produit à l'anode lorsque ils circulent dans un sens de circulation opposé depuis l'entrée jusqu'à la sortie de leur compartiment respectif.

Dans les différents modes de réalisation possibles de l'invention, on distingue les différents agencements entre réacteurs d'électrolyse dans une même installation par la manière dont ils sont reliés fluidiquement (circulation en co-courant ou en contre-courant), ainsi que par les valeurs des fractions molaires de vapeur d'eau en entrée et en sortie des réacteurs d'électrolyse successifs R1, R2, ...Rn.

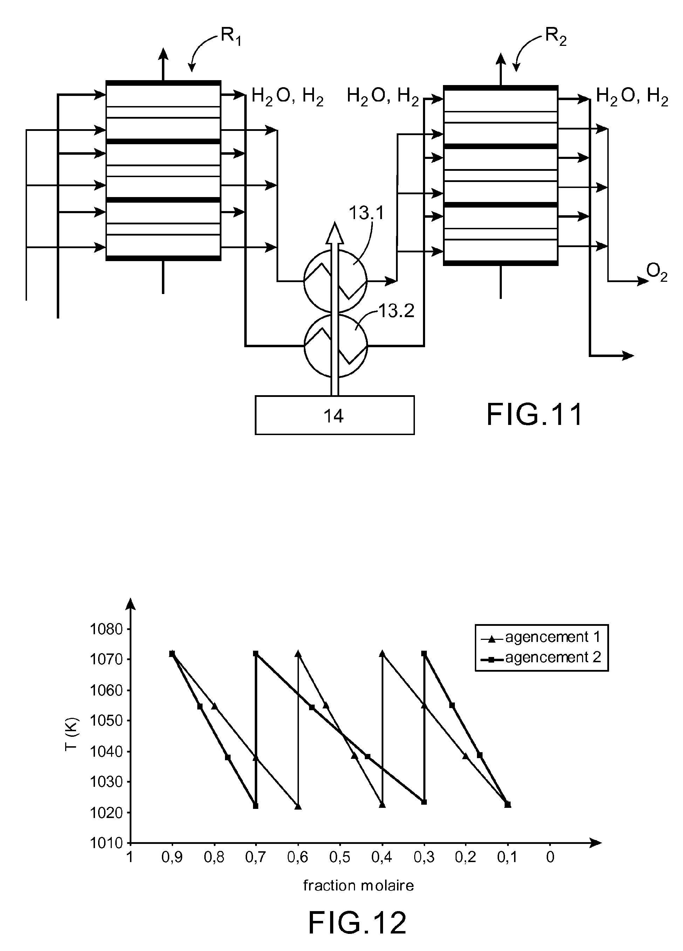

On a représenté en figure 11 une installation d'électrolyse de vapeur d'eau (EVHT) selon l'invention comprenant deux réacteurs d'électrolyse à empilement R1, R2 en série fluidique à la fois par leurs compartiments cathodiques et leurs compartiments anodiques. On précise ici que comparativement à des réacteurs à empilement selon l'état de l'art, les réacteurs R1, R2 sont de taille bien moindre.

Dans le mode illustré en figure 11, un gaz drainant est injecté en entrée des compartiments anodiques afin d'évacuer l'oxygène produit. Egalement, dans ce mode, la vapeur d'eau et l'hydrogène produit aux cathodes circulent en co-courant comme symbolisé par les flèches de gauche à droite sur cette figure. Les flèches verticales traversant chaque réacteur d'électrolyse R1, R2 symbolisent le sens du courant d'alimentation électrique qui le traverse. La tension d'alimentation électrique peut être différente d'un réacteur R1 à l'autre.

Selon l'invention, un échangeur de chaleur 13.1 est relié fluidiquement à la sortie du ou des compartiments cathodiques du réacteur R1 amont et à l'entrée du ou des compartiments cathodiques du réacteur R2 aval. De la même manière, un échangeur 13.2 est relié fluidiquement à la sortie du ou des compartiments anodiques du réacteur R1 amont et à l'entrée du ou des compartiments anodiques du réacteur R2 aval. Les circuits primaires des deux échangeurs de chaleur 13.1 et 13.2 sont reliés à une source de chaleur 14 externe aux réacteurs R1, R2. Les circuits secondaires de ces deux échangeurs de chaleur 13.1, 13.2 comportent donc respectivement le circuit fluidique de la vapeur d'eau et de l'hydrogène produit au(x) compartiment(s) cathodique(s) du réacteur amont R1 et le circuit fluidique du gaz drainant et de l'oxygène produit au(x) compartiment(s) anodique(s) du réacteur amont R1. Chaque échangeur de chaleur est donc relié entre deux empilements ou deux réacteurs.

De préférence, dans ce qui vient d'être décrit ci-dessus, R1 est le réacteur le plus en amont et R2 le réacteur le plus en aval.

Ainsi, selon l'invention on fait fonctionner chaque réacteur R1, R2 en mode fortement allothermique avec un taux de conversion de vapeur d'eau donné pour chaque réacteur inférieur à 100% et, on apporte de la chaleur d'une part à la vapeur d'eau et à l'hydrogène produit en amont et d'autre part au gaz drainant et à l'oxygène produit en amont, avant leur introduction dans le réacteur R2 le plus aval.

Afin de profiter au mieux du mode allothermique tout en respectant les contraintes de gradient en température par cellule d'électrolyse d'un réacteur, généralement admis à 50K, une solution selon l'invention, est d'alimenter électriquement chaque réacteur d'électrolyse sous une tension électrique telle qu'à la sortie des compartiments de circulation de fluides, ceux-ci soient à la limite acceptable en différence de température par rapport à leur entrée dans lesdits compartiments.

On peut alors obtenir des profils de température en fonction des fractions molaires de vapeur d'eau du type de ceux représentés sur la figure 12. Sur cette figure 12, sont représentés les profils thermiques de deux installations d'électrolyse réalisées identiquement avec trois réacteurs d'électrolyse en série fluidique et avec une circulation en co-courant entre d'une part la vapeur d'eau et l'hydrogène produit et d'autre part le gaz drainant et l'oxygène produit, cette circulation en co-courant étant également réalisée d'un réacteur à l'autre en série. La différence entre les deux installations, symbolisées respectivement agencement 1 (profil avec triangles) et agencement 2 (profil avec carré) provient des différences de taux de conversion de vapeur d'eau pour chaque réacteur.

Pour ces deux installations, le taux de conversion de vapeur d'eau global est le même de l'ordre de 89%, correspondant à une fraction molaire en entrée de 0,9 et une fraction molaire en sortie de 0,1. Dans ces deux installations, la source de chaleur 14 permet d'augmenter la température d'environ 50 K (de 1020K à 1072K), entre la sortie d'un réacteur amont et l'entrée d'un réacteur aval par l'intermédiaire des échangeurs de chaleur 13.1, 13.2 agencés sur le circuit des fluides. Cette augmentation de température se traduit sur la figure 12 par la verticale entre deux points à une même fraction molaire.

Dans l'agencement 1, on peut voir que la fraction molaire de vapeur d'eau passe de 0,9 en entrée à 0,6 en sortie du premier réacteur, de 0,6 en entrée du deuxième réacteur à 0,4 en sortie et enfin de 0.4 à 0.1 dans le troisième réacteur, i.e. celui le plus aval Ainsi, le taux de conversion individuels pour respectivement le premier, deuxième et troisième réacteurs est égal à 0.33, 0.33 et 0.75.

Comparativement, dans l'agencement 2, on peut voir que la quantité d'hydrogène convertie du réacteur le plus amont est égal à celui du plus aval (fraction molaire passant respectivement de 0,9 à 0,7 et 0,3 à 0,1), soit des taux de conversion individuels respectivement de 0.22, 0.57 et 0.66. Dans le réacteur intermédiaire, la fraction molaire passe de 0,7 à 0,3.

Dans les installations d'électrolyse de vapeur d'eau à haute température, il convient de noter qu'avantageusement les bilans énergétiques et exergétique ne dépendent absolument pas du type d'unité élémentaire SRU utilisé mais uniquement des conditions opératoires selon l'invention. Afin de comparer les différents agencements illustrés entre eux, on utilisera les conditions opératoires données dans le tableau 1 ci-dessous.

Tableau 1 :

| | |
|---|---|
| Température maximale atteignable au sein d'une cellule d'électrolyse | 1072 K |
| Fraction molaire de vapeur d'$H_2O$ en entrée d'une installation | 0.9 |
| Fraction molaire de vapeur d'$H_2O$ en sortie d'une installation | 0.1 |
| Pression | 1 atm |
| Ecart maximal de température entre l'entrée et la sortie dans un compartiment anodique ou cathodique d'une cellule d'électrolyse | 50 K |
| Rapport entre le débit à l'entrée anode sur le débit à la cathode d'une cellule d'électrolyse | compris entre 0 et 1 |

Dans tous les calculs qui suivent, on considère une mole du mélange gazeux entrant à une cathode. L'énergie électrique $E_{el}$ dépensée dans une installation d'électrolyse comprenant une pluralité de n réacteurs d'électrolyse en série vaut :

$$E_{el} = UI = \sum_i U_i I_i \quad (5)$$

dans laquelle $U_i$ et $I_i$ désignent respectivement la tension électrique imposée et l'intensité traversant un réacteur i, la tension étant au minimum égale à la tension de Nernst, soit

$$U_i > U_0 = \frac{\Delta G_i}{2F} . \quad (6)$$

On rappelle ici que la tension de Nernst est la tension d'équilibre d'une électrode par rapport au potentiel standard du couple d'oxydo-réduction mis en jeu à l'électrode.

La chaleur à apporter $Q_{al}$ pour compenser le fonctionnement en mode allothermique des réacteurs d'électrolyse est donc donnée par la relation:

$$Q_{al} = -\sum_i \left( U_i - U_{th,i} \right) I_i \quad (7)$$

Et, sur un réacteur d'électrolyse donné, la perte de température entre l'entrée et la sortie des fluides est donnée par la relation:

$$\Delta T = \frac{Q_{al,i}}{N_i Cp_i} \quad (8)$$

Selon l'invention, comme on règle la tension de manière à obtenir le même gradient de température $\Delta T$ (égal à 50k comme représenté sur la figure 12), la tension électrique thermoneutre $U_{th,i}$ ne dépendant que de la température peut alors être estimée identique dans tous les réacteurs en série d'une même installation.

On obtient alors l'expression de l'énergie électrique apportée totale qui s'écrit de la manière suivante :

$$\boxed{E_{el} = I_{tot} U_{th} - \Delta T \sum_i N_i Cp_i} \quad (9)$$

dans laquelle $Cp_i$ désigne la capacité calorifique molaire de l'ensemble des fluides traversant un réacteur d'électrolyse $i$ et $N_i$ le débit molaire total, c'est-à-dire à la fois celui aux cathodes et celui aux anodes. Autrement dit, ramené à un débit d'une mole à chaque cathode, on peut exprimer l'énergie électrique de la manière suivante:

$$E_{el} = \left( y_{H2Oe} - y_{H2Os} \right) * 2F * U_{th} - \Delta T * \sum_{i=n\_stack} N_i Cp_i \quad (10)$$

dans laquelle y H2Oe et y H20s désignent respectivement la fraction molaire de vapeur d'eau en entrée et en sortie de cathode.

De cette dernière équation (10), on constate que pour un gradient de température donné $\Delta T$, seule la variation du produit $N_i Cp_i$ et du nombre n_stack de réacteurs d'électrolyse en série électrique ont une influence sur l'énergie électrique dépensée. On voit ainsi que pour diminuer fortement la dépense électrique, il faut utiliser un nombre maximum de réacteurs d'électrolyse en série. Néanmoins si l'on augmente trop ce nombre de réacteurs en série, les tensions électriques adaptées deviennent trop faibles et tendent vers la tension de Nernst, et la surface de réaction associée à chaque réacteur d'électrolyse tend alors vers l'infini. L'homme de l'art veillera donc à trouver le bon compromis entre nombre de réacteurs d'électrolyse en série et la surface de réaction de chaque réacteur.

Dans les conditions opératoires mentionnées ci-dessus, on peut regarder l'impact du nombre de réacteurs d'électrolyse sur le rendement exergétique global. On a étudié cela pour le mode de réalisation de la figure 13 : comme représenté ici, cette installation comprend au moins trois réacteurs R1, R2, R3 en série fluidique avec pour chaque réacteur une circulation en co-courant, c'est-à-dire une circulation de vapeur d'eau et de l'hydrogène produit aux cathodes dans le même sens de circulation que le gaz drainant et l'oxygène produit aux anodes. Cette circulation en co-courant est également réalisée d'un réacteur R1 à l'autre en série. Entre deux réacteurs successifs R1-R2 ou R2-R3 est relié fluidiquement un échangeur de chaleur respectivement noté 15 ou 17, aux circuits à la fois de vapeur d'eau/hydrogène produit et gaz drainant/oxygène. En outre, un échangeur de chaleur est relié fluidiquement en amont du réacteur R1 le plus amont. Tous les circuits primaires des échangeurs thermiques 13, 15, 17 sont reliés à une source de chaleur externe, de préférence la même pour tous les échangeurs. Avec un tel agencement selon la figure 13, on obtient les résultats de dépense énergétique et de rendement exergétique de la figure 14. Sur cette figure 14, on voit que l'augmentation du nombre de réacteurs en série, directement liée à la baisse de la tension moyenne appliquée, améliore le rendement exergétique. On voit également que les tensions électriques moyennes appliquées sont très faibles, il faut alors veiller à ce que la tension reste toujours localement supérieure à la tension de Nernst afin que l'électrolyse reste possible.

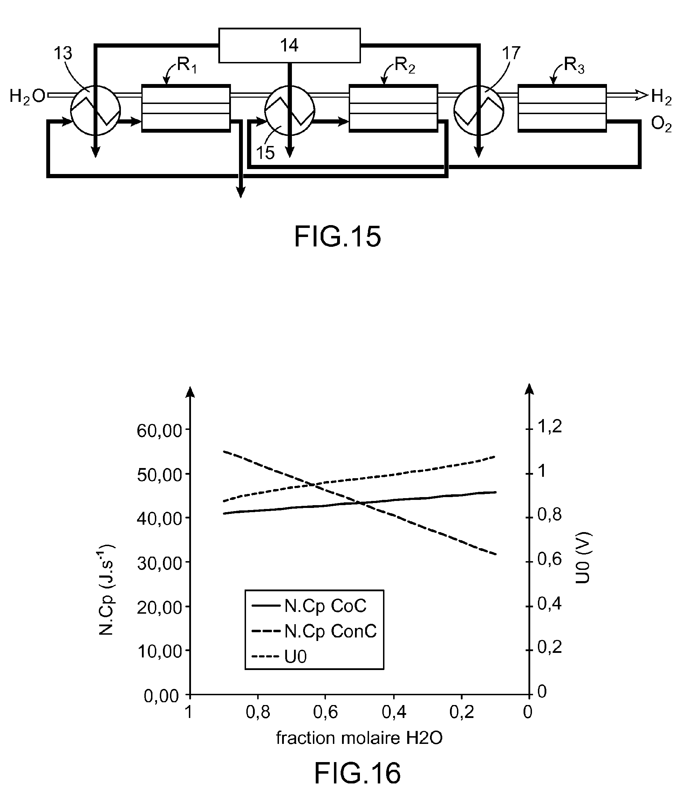

Afin de profiter au mieux du découpage d'une installation d'électrolyse en réacteurs d'électrolyse de petite taille, un mode de réalisation avantageux est montré en figure 15. Ici, l'agencement est tel que la circulation est en contre-courant d'un réacteur à l'autre mais en co-courant à l'intérieur d'un même réacteur R1, R2, R3 Plus précisément, aucun gaz drainant n'est apporté aux anodes du réacteur le plus aval R3 et l'oxygène produit dans ce réacteur est réchauffé par l'échangeur thermique 15 pour alimenter les anodes du réacteur intermédiaire R2, puis l'oxygène en sortie du réacteur intermédiaire R2 est réchauffé par l'échangeur thermique le plus amont 13 avant d'être injecté dans le réacteur R1 le plus amont. L'oxygène finalement produit est évacué en sortie du réacteur R1 le plus amont. Autrement dit, l'oxygène produit respectivement d'aval en amont circule à contre-courant de l'hydrogène produit d'amont en aval. Cet agencement selon la figure 15 permet aux réacteurs d'électrolyse à forte teneur en eau en entrée de bénéficier du plus grand facteur $N_iCp_i$ (produit de la capacité calorifique et du débit) ainsi que de la tension de Nernst la plus basse. Cela est illustré en figure 16 de laquelle on peut faire la comparaison entre un mode en co-courant (figure 13) et un mode en contre-courant (figure 15). Sur cette figure 16, on précise que l'indice Coc signifie donc une circulation de fluides en co-courant d'un réacteur d'électrolyse à l'autre tandis que l'indice ConC signifie une circulation de fluides en contre-courant d'un réacteur d'électrolyse à l'autre, Uo désignant la tension de Nernst.

Une installation d'électrolyse selon l'invention avec un agencement permettant une circulation de fluides en contre-courant (figure 15) permet de fonctionner en mode très fortement allothermique, c'est-à-dire dans un mode où le produit $N_iCp_i$ est le plus fort (voir équation (9)) et la faible tension de Nernst permet de toujours garder une surtension assez élevée et donc de bonnes performances électrochimiques en final, la surface de réaction nécessaire étant plus faible. De manière encore plus avantageuse, il est possible selon l'invention de ne transformer qu'une faible partie de la vapeur d'eau dans les réacteurs d'électrolyse les plus amont afin de fonctionner avec la plus forte allothermie possible

Ainsi, si l'on compare les deux agencements respectivement selon la figure 13 et selon la figure 15 avec aucun gaz drainant en entrée de compartiments anodiques, on obtient les résultats comparatifs indiqués dans le tableau 2 ci-dessous.

Tableau 2 :

| | yH2O entrée | yH2O intermédiaire 1 | yH2O intermédiaire 2 | YH2O sortie | Rendement exergétique | Energie électrique (J) | Chaleur Q (J) | S totale (m²) | E1(V) | E2(V) | E3(V) |
|---|---|---|---|---|---|---|---|---|---|---|---|
| Contre-courant | 0,9 | 0,8 | 0,7 | 0,1 | 0,9493 | 189 914 | 6113,5 | 30,332 | 1,114 | 1,126 | 1,26692 |
| Co-courant | 0,9 | 0,8 | 0,7 | 0,1 | 0,9470 | 191 668 | 4403,9 | 28,636 | 1,177 | 1,172 | 1,26389 |
| Contre-courant | 0,9 | 0,7 | 0,5 | 0,1 | 0,9484 | 190 597 | 5421,0 | 29,715 | 1,203 | 1,216 | 1,26011 |
| Co-courant | 0,9 | 0,7 | 0,5 | 0,1 | 0,9475 | 191 298 | 4749,2 | 29,507 | 1,230 | 1,225 | 1,25102 |

A la lecture de ce tableau 2, on constate donc une légère diminution de la facture électrique et donc un gain en dépense exergétique, au prix d'une légère augmentation de la surface de réaction due au mode de fonctionnement allothermique plus élevé. D'autres tests montrent que l'agencement selon la figure 15 (circulation des fluides à contre-courant) donne de meilleures performances qu'un agencement selon la figure 13 (circulation des fluides à co-courant).

Autrement dit, on peut en conclure qu'un agencement avec circulation des fluides en contre-courant d'un réacteur d'électrolyse à un autre en série au sein d'une même installation, permet d'augmenter le produit $N_iCp_i$ aux fortes valeurs de teneurs en eau et donc aux faibles tensions de Nernst. Ainsi, cela permet de fonctionner de manière fortement allothermique tout en gardant des performances électrochimiques satisfaisantes, grâce à la forte teneur en eau et à la basse tension de Nernst qui maintiennent une densité de courant élevée. Cela correspond de fait à ne réaliser qu'une faible part de la réaction globale d'électrolyse dans les réacteurs les plus en amont, comme cela ressort du tableau 2 dans lequel les fractions molaires de vapeur d'eau dans les réacteurs les plus amont sont faibles, respectivement 0,9-0,8 ; 0,8-0,7 tandis que les fractions molaires en entrée et sortie du réacteur le plus aval sont bien plus différentiées puisqu'égales respectivement à 0,7 et 0,1.

Autrement dit encore, un agencement selon la figure 15 (circulation des fluides à contre-courants) permet de garder une tension d'alimentation électrique relativement élevée, bien qu'allothermique pour les faibles teneurs en eau, ce qui permet de maintenir une densité de courant acceptable, un fonctionnement très allothermique pouvant exiger une surface trop importante aux faibles teneurs en eau, comme déjà indiqué en référence à la figure 7.

Par ailleurs, lorsqu'on souhaite obtenir un fluide de sortie cathodique à faible teneur en eau, c'est-à-dire avec une forte conversion en hydrogène, il est préférable d'imposer une tension électrique relativement élevée pour les réacteurs d'électrolyse les plus en aval. Les cellules d'électrolyse ayant tendance à s'endommager plus rapidement pour des tensions électriques élevées et pour des faibles teneurs en eau, les réacteurs les plus en aval, vont donc s'user plus rapidement que ceux plus en amont. En termes de durée de vie pour une installation complète selon l'invention, cela constitue un avantage car il est alors possible de remplacer indépendamment les réacteurs les uns des autres avec une fréquence accrue pour ceux en aval. On précise que si l'ensemble des réacteurs ne comportait qu'une seule cellule d'électrolyse, alors il est nécessaire de changer l'ensemble des réacteurs à la fréquence maximale correspondant à la fréquence pour ceux en aval selon l'invention. De plus, comme les cellules d'électrolyse des réacteurs les plus en amont vont avoir moins tendance à s'abimer, il est possible de réaliser des économies sur les couches protectrices des électrodes habituellement utilisés selon l'état de l'art pour prolonger la durée de vie des cellules.

En conclusion, on peut dire qu'avec un agencement selon la figure 15, la durée de vie moyenne d'une installation d'électrolyse à réacteurs d'électrolyse en série les uns avec les autres va augmenter nettement. De plus, comparativement à une solution selon l'état de l'art à intégration d'échangeurs thermiques au sein même de réacteurs à empilement, le remplacement des réacteurs selon l'invention est nettement plus aisé et moins coûteux.

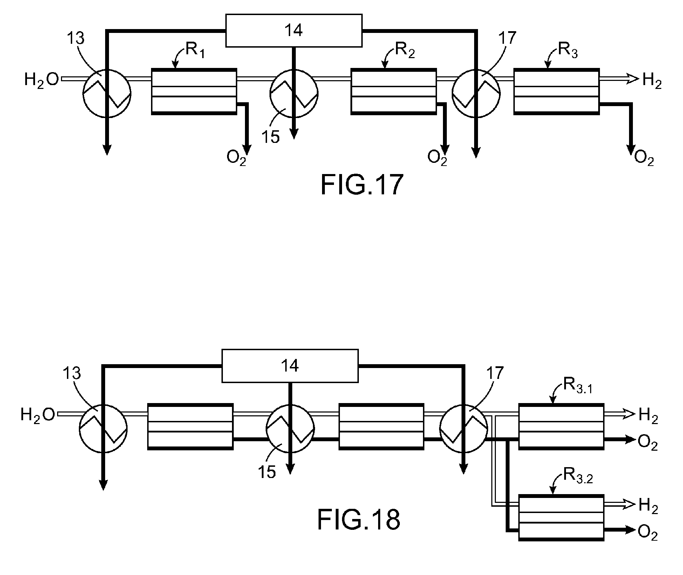

Cela étant, la chaleur à haute température est tout de même coûteuse et peut n'être disponible qu'en quantité limitée en fonction de la nature de la source externe. Typiquement, à une température de l'ordre de 1000 K, l'exergie de la chaleur représente 70% de l'exergie électrique. Ainsi, pour diminuer la dépense exergétique, on peut selon l'invention ne pas réchauffer les fluides sortant des anodes. Un tel agencement est représenté en figure 17 qui reprend l'agencement de la figure 13 (circulation de fluides à co-courant d'un réacteur à l'autre) mais avec ici une évacuation de l'oxygène produit en sortie de chaque réacteur, comme symbolisé par les flèche descendantes sur cette figure 17. Un tel agencement selon la figure 17 a cependant l'inconvénient de faire bénéficier chaque réacteur d'un produit $N_iCp_i$ moindre. Ainsi, dans cet agencement, pour un nombre de réacteurs en série donné, il est préférable fonctionner en mode moins allothermique : le rendement exergétique s'en ressent alors d'autant comme montré dans le tableau 3 ci-dessous.

Tableau 3 :

| | yH2O entrée | yH2O intermédiaire 1 | yH2O intermédiaire 2 | YH2O sortie | Rendement exergétique | Energie électrique (J) | Chaleur Q (J) | S totale (m²) | E1 (V) | E2 (V) | E3 (V) |
|---|---|---|---|---|---|---|---|---|---|---|---|
| Contre-courant | 0,9 | 0,8 | 0,7 | 0,1 | 0,9493 | 189 914 | 6113 | 30,3 | 1,114 | 1,126 | 1,267 |
| Co-courant | 0,9 | 0,8 | 0,7 | 0,1 | 0,9470 | 191 668 | 4404 | 28,6 | 1,177 | 1,172 | 1,264 |
| Avec O2 évacué | 0,9 | 0,8 | 0,7 | 0,1 | 0,9462 | 192 194 | 3880 | 28,2 | 1,177 | 1,181 | 1,267 |
| Contre-courant | 0,9 | 0,7 | 0,5 | 0,1 | 0,9484 | 190 597 | 5421 | 29,7 | 1,203 | 1,216 | 1,260 |
| Co-courant | 0,9 | 0,7 | 0,5 | 0,1 | 0,9475 | 191 298 | 4749 | 29,5 | 1,230 | 1,225 | 1,251 |
| Avec O2 évacué | 0,9 | 0,7 | 0,5 | 0,1 | 0,9460 | 192 350 | 3702 | 28,6 | 1,230 | 1,234 | 1,260 |

Néanmoins, en augmentant le nombre de réacteurs en série, on peut arriver à des mêmes niveaux de tensions électriques par réacteur, et donc aux mêmes rendements exergétiques.

D'ailleurs, même en évacuant l'oxygène produit par chaque réacteur (figure 17), le produit $N_iCp_i$ reste plus élevé aux fortes teneurs en eau : il est donc préférable de fonctionner encore en mode fortement allothermique, c'est-à-dire avec une faible différence de fraction molaire en vapeur d'eau entre entrée et sortie, sur les premiers réacteurs, i.e. les plus en amont, afin d'obtenir un meilleur rendement exergétique, tout en gardant des densités de courant satisfaisantes. Autrement dit, un agencement selon la figure 17 présente l'avantage d'une économie dans la chaleur externe à apporter.

On a représenté en figure 18, une variante de l'invention selon laquelle les débits de fluide sont divisés en parallèle dans différents réacteurs R3.1, R3.2. On peut aussi réunir des débits de fluide en parallèle pour augmenter ou diminuer la surface de réaction d'électrolyse associée.

On a comparé dans le tableau 4 ci-dessous les surfaces de réaction nécessaires avec deux, jeux molaires respectivement de 0,9-0,7-0.5-0.1 et de 0,9-0,8-0.7-0.1 avec l'agencement représenté figure 13.

Tableau 4 :

| Jeux molaires | S1 (m²) | S2 (m²) | S3 (m²) | S totale (m²) | Rendement exergétique |
|---|---|---|---|---|---|
| 0,9-0,8-0,7-0,1 | 4,34 | 4,71 | 21,23 | 30,28 | 0,949 |
| 0,9-0,7-0,5-0,1 | 6,43 | 7,29 | 15,94 | 29,66 | 0,948 |

Du tableau 4, on peut voir que le jeu molaire 0,9-0,8-0.7-0.1 nécessite une surface beaucoup plus grande sur le troisième réacteur R3. Il est donc utile dans ce cas, afin de permettre une conversion avec, en final, un jeu molaire 0.7-0.1, d'utiliser l'agencement de la figure 18, afin de répartir la surface S3 sur deux réacteurs R3.1, R3.2.

Si l'on doit multiplier le nombre de réacteurs dans une même installation d'électrolyse selon l'invention, en relier certains en parallèle les uns aux autre est moins avantageux que de les relier en série. En effet, disposer deux réacteurs en parallèle est exactement équivalent à disposer d'un réacteur de moins en série, avec les conséquences montrées en figure 14, soit un moindre rendement exergétique. En revanche, cela a un intérêt lorsque le nombre de réacteurs en série requis est si important que les tensions d'alimentation électriques deviennent trop proches de la tension de Nernst, auquel cas la surface de réaction nécessaire par réacteur peut devenir bien trop grande.

D'ailleurs, afin de diminuer la surface de réaction d'électrolyse nécessaire, il peut être avantageux de ne pas fonctionner en mode allothermique pour amener la fraction molaire de l'eau à la valeur voulue, les densités de courant étant très faibles à ce niveau. Ainsi on peut envisager de fonctionner en mode autothermique, voire légèrement exothermique, sur le(s) réacteur(s) les plus en aval afin de réduire significativement la surface de réaction nécessaire pour finir de convertir les dernières fractions molaires d'eau. Dans le cas où l'on souhaite descendre au final à une très faible teneur en eau (taux de conversion global de l'installation très élevé), cela peut même s'avérer nécessaire. On a indiqué dans le tableau 5 ci-dessous, les résultats comparatifs entre différents modes de fonctionnement en fin d'installation d'électrolyse, c'est-à-dire dans les réacteurs d'électrolyse les plus aval d'une installation selon l'invention. On précise ainsi que « Allothermique max » désigne un mode allothermique maximal, « Fin Autothermique » désigne un mode de fonctionnement autothermique en fin d'installation, i.e. dans les réacteurs les plus aval (R4).

Tableau 5 :

| | yH2Oe | Rendement Exergétique | Energie électrique (J) | Chaleur Q (J) | Delta Exergie | S totale (m²) | E1 (V) | E2 (V) | E3 (V) | E4 (V) | S1 (m²) | S2 (m²) | S3 (m²) | S4 (m²) |
|---|---|---|---|---|---|---|---|---|---|---|---|---|---|---|
| Allothermique Max | 0,9-0,8-0,6-0,3-0,1 | 0,9516 | 188 104 | 7 923 | 184 505 | 32,566 | 1,114 | 1,210 | 1,245 | 1,240 | 4,35 | 6,88 | 11,3 | 0,04 |
| Fin Autotherme | 0,9-0,8-0,6-0,3-0,1 | 0,9485 | 189 914 | 7 923 | 185 613 | 28,830 | 1,114 | 1,210 | 1,245 | 1,287 | 4,35 | 6,88 | 11,3 | 6,30 |
| Allothermique Max | 0,9-0,8-0,6-0,5-0,1 | 0,9527 | 187 639 | 8268 | 184 505 | 29,369 | 1,114 | 1,210 | 1,151 | 1,260 | 4,35 | 6,02 | 3,03 | 5,97 |
| Fin Autotherme | 0,9-0,8-0,6-0,5-0,1 | 0,9484 | 189 681 | 8268 | 185 613 | 24,550 | 1,114 | 1,210 | 1,151 | 1,287 | 4,35 | 6,02 | 3,03 | 1,15 |
| Fin Exotherme | 0,9-0,8-0,6-0,5-0,1 | 0,9388 | 194577 | 8268 | 188 329 | 18,864 | 1,114 | 1,210 | 1,151 | 1,350 | 4,35 | 6,02 | 3,03 | 5,47 |

A la lecture de ce tableau 5, on peut en déduire qu'en fonctionnant en mode autothermique voire exothermique dans les réacteurs d'électrolyse les plus aval, cela permet de réduire nettement la surface de réaction nécessaire, mais avec l'inconvénient d'un coût supplémentaire en énergie électrique requise.

D'autres améliorations peuvent être envisagées sans pour autant sortir du cadre de l'invention.

Comme détaillé ci-dessus, l'application principale visée par l'invention est la production d'hydrogène par EVHT en mode allothermique pour minimiser la dépense électrique.

Une autre application possible est la production d'électricité avec des piles à combustible en série comme les réacteurs d'électrolyse qui viennent d'être décrits mais avec dans cette application la possibilité d'adapter la tension électrique de sortie en fonction de la composition du mélange fluidique. On peut ainsi, comparativement à l'état de l'art, avoir un gain en rendement et et/ou en taille de surface réactionnelle nécessaire.

Les inventeurs pensent enfin qu'une autre application possible pour l'invention est la co-électrolyse $H_2O/CO_2$.

L'invention qui vient d'être décrite permet d'atteindre des taux de conversion globaux de 90 voir 95%.

Dans l'ensemble de la demande, on mentionne le fonctionnement possible d'un mode fortement allothermique. Le mode allothermique est atteint, lorsque la tension d'alimentation électrique du réacteur d'électrolyse considéré est inférieure à 1.28V. Ainsi, théoriquement, un réacteur d'électrolyse unique selon l'état de l'art avec un taux de conversion de 70 %, sans balayage à l'anode ne pourra atteindre une tension de 1.267 V sans franchir la différence de température de 50K considérée usuellement comme acceptable entre l'entrée et la sortie dudit réacteur. Grâce à l'invention, un mode fortement allothermique peut être atteint avec des tensions de l'ordre de 1.1V.

L'invention peut être réalisée avec des surfaces d'échanges d'échangeurs thermiques relativement faible : ainsi, par exemple, pour chauffer un débit de 1 mol/s de 750°C à 800°C, par une source chaude à débit très important à 820°C et avec une efficacité de 0.88, un coefficient d'échange moyen de 200 $W.m^{-2}.K^{-1}$, on a besoin d'une surface d'échange d'échangeur thermique de l'ordre de 0.3 $m^2$.

## Revendications

1. Installation d'électrolyse de vapeur d'eau à haute température (EVHT) ou de production d'électricité à pile à combustible (SOFC), comprenant au moins deux réacteurs électrochimiques (R1, R2),
dans laquelle chaque réacteur électrochimique comprenant au moins une cellule d'électrochimique élémentaire (C1, C2,...Cn), chaque cellule étant constituée d'une cathode (2.1, 2.2, ,...2.n), d'une anode (4.1, 4.2, ...4.n) et d'un électrolyte (6.1, 6.2,..., 6.n) intercalé entre la cathode et l'anode, au moins un élément connecteur (8) comportant au moins un compartiment (9) pour la circulation de gaz à la cathode, étant agencé en contact électrique avec la cathode d'une cellule élémentaire et, au moins un élément connecteur comportant au moins un compartiment (11) pour la circulation de gaz à l'anode étant agencé en contact électrique avec l'anode d'une cellule élémentaire et,
dans laquelle les deux réacteurs électrochimiques sont reliés fluidiquement en série l'un à l'autre au moins par un compartiment de circulation de gaz,
**caractérisée en ce qu'**elle comprend en outre au moins un échangeur de chaleur (13, 13.1, 13.2, 15, 17) comportant un circuit relié fluidiquement en série à la sortie d'un (9) des compartiments de circulation de gaz d'un des deux réacteurs et à l'entrée d'un des compartiments (9) de circulation de gaz de l'autre des deux réacteurs et comportant un autre circuit relié fluidiquement à une source de chaleur externe (14) aux réacteurs.

2. Installation d'électrolyse de vapeur d'eau à haute température (EVHT) ou de production d'électricité à pile à combustible (SOFC) selon la revendication 1, dans laquelle chaque réacteur comprend un empilement d'une pluralité de cellules électrochimiques élémentaires, une plaque interconnectrice (8) étant agencée entre deux cellules élémentaires adjacentes et en contact électrique avec une électrode d'une des deux cellules élémentaires et une électrode de l'autre des deux cellules élémentaires, la plaque interconnectrice comportant au moins un compartiment cathodique (11) et au moins un compartiment anodique (9) pour la circulation de gaz respectivement à la cathode et l'anode.

3. Installation d'électrolyse de vapeur d'eau à haute température (EVHT) ou de production d'électricité à pile à combustible (SOFC) selon la revendication 1 ou 2, dans laquelle chaque échangeur de chaleur (15, 17) est relié fluidiquement en série à la sortie à la fois des deux compartiments de circulation de gaz d'un deux réacteurs et à l'entrée des deux compartiments de circulation de gaz de l'autre des deux réacteurs.

4. Installation d'électrolyse de vapeur d'eau à haute température (EVHT) ou de production d'électricité à pile à combustible (SOFC) selon la revendication 1 ou 2, dans laquelle chaque échangeur de chaleur (15, 17) est relié fluidiquement en série à la sortie d'un seul des deux compartiments de circulation de gaz d'un deux réacteurs et à l'entrée d'un seul des compartiments de circulation de gaz de l'autre des deux réacteurs, la sortie de l'autre des compartiments de chaque réacteur étant relié à un circuit indépendant.

**5.** Installation d'électrolyse de vapeur d'eau à haute température (EVHT) ou de production d'électricité à pile à combustible (SOFC) selon l'une des revendications précédentes, comprenant en outre au moins, dans sa partie aval, deux réacteurs (R3.1, R3.2) reliés fluidiquement en parallèle l'un avec l'autre.

**6.** Procédé d'électrolyse de la vapeur eau à haute température mis en oeuvre par une installation selon l'une quelconque des installations précédentes, selon lequel on réalise au moins les étapes suivantes :

    a/ fonctionnement en mode allothermique au moins dans les réacteurs d'électrolyse, le ou les plus en amont de l'installation avec un gradient de température entre une entrée et une sortie fluidique d'un desdits réacteurs limité à une valeur prédéterminée ΔT;
    b/ génération de chaleur par la source de chaleur externe (14) pour apporter une augmentation de température de l'ordre de la valeur prédéterminée ΔT au moins au fluide sortant du (des) compartiment(s) cathodique(s) d'un premier réacteur avant son introduction dans ceux d'un deuxième réacteur, disposé en série, en aval du premier.

**7.** Procédé d'électrolyse de la vapeur eau à haute température selon la revendication 6, selon lequel la valeur de gradient thermique ΔT prédéterminée selon l'étape a/ est au plus égale à 100K, de préférence à 50K.

**8.** Procédé d'électrolyse de la vapeur eau à haute température selon la revendication 6 ou 7, selon lequel l'étape a/ est réalisée de sorte à avoir tous les réacteurs d'électrolyse en fonctionnement en mode allothermique.

**9.** Procédé d'électrolyse de la vapeur eau à haute température selon la revendication 6 ou 7, selon lequel l'étape a/ est réalisée de sorte à avoir une partie des réacteurs, en aval ou les plus en aval, en fonctionnement en mode autothermique.

**10.** Procédé d'électrolyse de la vapeur eau à haute température selon l'une des revendications 6 à 9, selon lequel on réalise dans chaque réacteur d'électrolyse une circulation de fluide (H2O, H2) dans le ou les compartiments cathodiques en co-courant avec celle du fluide (02, gaz drainant) dans le ou les compartiments anodiques.

**11.** Procédé d'électrolyse de la vapeur eau à haute température selon l'une des revendications 6 à 9, selon lequel on réalise dans chaque réacteur d'électrolyse une circulation de fluide (H2O, H2) dans le ou les compartiments cathodiques en contre-courant avec celle du fluide (02, gaz drainant) dans le ou les compartiments anodiques.

**12.** Procédé d'électrolyse de la vapeur eau à haute température selon l'une des revendications 6 à 9, selon lequel on réalise dans chaque réacteur d'électrolyse une circulation de fluide (H2O, H2) dans le ou les compartiments cathodiques en courant-croisé avec celle du fluide (02, gaz drainant) dans le ou les compartiments anodiques.

**13.** Procédé d'électrolyse de la vapeur eau à haute température selon la revendication 10, selon lequel on réalise en outre dans chaque réacteur d'électrolyse une circulation de fluide (H2O, H2) en co-courant avec celle du fluide (02, gaz drainant) entre réacteurs consécutifs.

**14.** Procédé d'électrolyse de la vapeur eau à haute température selon la revendication 10, selon lequel on réalise en outre d'électrolyse une circulation de fluide (H2O, H2) en contre-courant avec celle du fluide (02, gaz drainant) entre réacteurs consécutifs.

**15.** Procédé d'électrolyse de la vapeur eau à haute température selon l'une quelconque des revendications 6 à 14, selon lequel on réalise l'évacuation de l'oxygène produit par chaque réacteur d'électrolyse.

**Patentansprüche**

**1.** Anlage zur Hochtemperatur-Wasserdampfelektrolyse (EVHT) oder zur Brennstoffzellen-Stromerzeugung (SOFC), umfassend wenigstens zwei elektrochemische Reaktoren (R1, R2),
wobei jeder elektrochemische Reaktor wenigstens eine elektrochemische Elementarzelle (C1, C2,...Cn) umfasst, wobei jede Zelle durch eine Kathode (2.1, 2.2, ...2.n), durch eine Anode (4.1, 4.2,...4.n) und durch einen Elektrolyten (6.1, 6.2,...,6.n) gebildet ist, der zwischen die Kathode und die Anode eingefügt ist, wobei wenigstens ein Verbindungselement (8), das wenigstens ein Fach (9) für die Zirkulation von Gas zur Kathode umfasst, in elektrischem Kontakt mit der Kathode einer Elementarzelle angeordnet ist, und wenigstens ein Verbindungselement, das wenigstens ein Fach (11) für die Zirkulation von Gas zur Anode umfasst, in elektrischem Kontakt mit der Anode einer Elementarzelle angeordnet ist, und

wobei die zwei elektrochemischen Reaktoren fluidmäßig wenigstens durch ein Gaszirkulationsfach in Reihe miteinander verbunden sind,

**dadurch gekennzeichnet, dass** sie ferner wenigstens einen Wärmetauscher (13, 13.1, 13.2, 15, 17) umfasst, der einen Kreislauf umfasst, welcher fluidmäßig in Reihe mit dem Ausgang eines (9) der Gaszirkulationsfächer eines der zwei Reaktoren und mit dem Eingang eines der Gaszirkulationsfächer (9) des anderen der zwei Reaktoren verbunden ist, und einen weiteren Kreislauf umfasst, der fluidmäßig mit einer bezüglich der Reaktoren externen Wärmequelle (14) verbunden ist.

2. Anlage zur Hochtemperatur-Wasserdampfelektrolyse (EVHT) oder zur Brennstoffzellen-Stromerzeugung (SOFC) nach Anspruch 1, bei der jeder Reaktor einen Stapel mit einer Mehrzahl von elektrochemischen Elementarzellen umfasst, wobei eine Zwischenverbindungsplatte (8) zwischen zwei benachbarten Elementarzellen und in elektrischem Kontakt mit einer Elektrode einer der zwei Elementarzellen und einer Elektrode der anderen der zwei Elementarzellen angeordnet ist, wobei die Zwischenverbindungsplatte wenigstens ein Kathodenfach (11) und wenigstens ein Anodenfach (9) für die Gaszirkulation zur Kathode beziehungsweise zur Anode umfasst.

3. Anlage zur Hochtemperatur-Wasserdampfelektrolyse (EVHT) oder zur Brennstoffzellen-Stromerzeugung (SOFC) nach Anspruch 1 oder 2, bei der jeder Wärmetauscher (15, 17) fluidmäßig in Reihe am Ausgang der zwei Gaszirkulationsfächer eines der zwei Reaktoren gleichzeitig und mit dem Eingang der zwei Gaszirkulationsfächer des anderen der zwei Reaktoren verbunden ist.

4. Anlage zur Hochtemperatur-Wasserdampfelektrolyse (EVHT) oder zur Brennstoffzellen-Stromerzeugung (SOFC) nach Anspruch 1 oder 2, bei der jeder Wärmetauscher (15, 17) fluidmäßig in Reihe mit dem Ausgang nur eines der zwei Gaszirkulationsfächer eines der zwei Reaktoren und mit dem Eingang nur eines der Gaszirkulationsfächer des anderen der zwei Reaktoren verbunden ist, wobei der Ausgang des anderen der Fächer jedes Reaktors mit einem unabhängigen Kreislauf verbunden ist.

5. Anlage zur Hochtemperatur-Wasserdampfelektrolyse (EVHT) oder zur Brennstoffzellen-Stromerzeugung (SOFC) nach einem der vorhergehenden Ansprüche, ferner umfassend wenigstens zwei Reaktoren (R3.1, R3.2) in ihrem stromabwärtigen Bereich, die fluidmäßig parallel zueinander verbunden sind.

6. Verfahren zur Hochtemperatur-Wasserdampfelektrolyse, das durch eine Anlage nach einem der vorhergehenden Ansprüche durchgeführt wird, bei dem man wenigstens die folgenden Schritte durchführt:

a/ Betrieb im allothermen Modus wenigstens in dem oder den stromaufwärtigsten Elektroysereaktoren der Anlage mit einem Temperaturgradienten zwischen einem Fluideingang und einem Fluidausgang eines der Reaktoren, der auf einen vorbestimmten Wert $\Delta T$ begrenzt ist;

b/ Erzeugung von Wärme durch die externe Wärmequelle (14) um einen Temperaturanstieg in der Größenordnung des vorbestimmten Werts $\Delta T$ wenigstens bei dem Fluid zu bewirken, das aus dem/den Kathodenfach/Kathodenfächern eines ersten Reaktors austritt, bevor es in jene eines in Reihe angeordneten zweiten Reaktors stromabwärts des ersten eintritt.

7. Verfahren zur Hochtemperatur-Wasserdampfelektrolyse nach Anspruch 6, bei dem der vorbestimmte Wert des thermischen Gradienten $\Delta T$ gemäß Schritt a/ höchstens gleich 100K ist, vorzugsweise 50K.

8. Verfahren zur Hochtemperatur-Wasserdampfelektrolyse nach Anspruch 6 oder 7, bei dem der Schritt a/ derart durchgeführt wird, dass alle Elektrolysereaktoren im allothermen Modus betrieben werden.

9. Verfahren zur Hochtemperatur-Wasserdampfelektrolyse nach Anspruch 6 oder 7, bei dem der Schritt a/ derart durchgeführt wird, dass ein stromabwärtiger oder am meisten stromabwärtiger Teil der Reaktoren im allothermen Modus betrieben wird.

10. Verfahren zur Hochtemperatur-Wasserdampfelektrolyse nach einem der Ansprüche 6 bis 9, bei dem man in jedem Elektrolysereaktor eine Zirkulation von Fluid ($H_2O$, $H_2$) in dem oder den Kathodenfächern im Gleichstrom mit dem Fluid ($O_2$, Drainagegas) in dem oder den Anodenfächern durchführt.

**11.** Verfahren zur Hochtemperatur-Wasserdampfelektrolyse nach einem der Ansprüche 6 bis 9, bei dem man in jedem Elektrolysereaktor eine Zirkulation von Fluid (H2O, H2) in dem oder den Kathodenfächern im Gegenstrom mit dem Fluid (02, Drainagegas) in dem oder den Anodenfächern durchführt.

**12.** Verfahren zur Hochtemperatur-Wasserdampfelektrolyse nach einem der Ansprüche 6 bis 9, bei dem man in jedem Elektrolysereaktor eine Zirkulation von Fluid (H2O, H2) in dem oder den Kathodenfächern im Kreuzstrom mit dem Fluid (02, Drainagegas) in dem oder den Anodenfächern durchführt.

**13.** Verfahren zur Hochtemperatur-Wasserdampfelektrolyse nach Anspruch 10, bei dem man ferner in jedem Elektrolysereaktor eine Zirkulation von Fluid (H2O, H2) im Gleichstrom mit dem Fluid (02, Drainagegas) zwischen aufeinanderfolgenden Reaktoren durchführt.

**14.** Verfahren zur Hochtemperatur-Wasserdampfelektrolyse nach Anspruch 10, bei dem man ferner in jedem Elektrolysereaktor eine Zirkulation von Fluid (H2O, H2) im Gegenstrom mit dem Fluid (02, Drainagegas) zwischen aufeinanderfolgenden Reaktoren durchführt.

**15.** Verfahren zur Hochtemperatur-Wasserdampfelektrolyse nach einem der Ansprüche 6 bis 14, bei dem man eine Ableitung des Sauerstoffs bewirkt, der durch jeden Elektrolysereaktor erzeugt wird.

**Claims**

**1.** A high temperature steam electrolysis (THSE) or fuel cell electric power generation (SOFC) facility, including at least two electrochemical reactors (R1, R2),
wherein each electrochemical reactor comprises at least one electrochemical unit cell (C1, C2, ..., Cn), each cell consisting of a cathode (2.1, 2.2, ..., 2.n), an anode (4.1, 4.2, ..., 4.n) and an electrolyte (6.1, 6.2, ..., 6.n) interposed between the cathode and the anode, at least one connecting element (8) including at least one compartment (9) for gas flow to the cathode, being arranged in electrical contact with the cathode of the unit cell and, at least one connecting element including at least one compartment (11) for gas flow to the anode being arranged in electrical contact with the anode of the unit cell and,
wherein both electrochemical reactors are fluidly connected in series to each other at least by one gas flow compartment,
**characterised in that** it further comprises at least one heat exchanger (13, 13.1, 13.2, 15, 17) including a circuit fluidly connected in series to the outlet of one (9) of the gas flow compartments of one of both reactors and to the inlet of one of the gas flow compartments (9) of the other one of both reactors and including another circuit fluidly connected to a heat source (14) external to the reactors.

**2.** The high temperature steam electrolysis (HTSE) or fuel cell electric power generation (SOFC) facility according to claim 1, wherein each reactor comprises a stack of a plurality of electrochemical unit cells, an interconnecting plate (8) being arranged between two adjacent unit cells and an electrical contact with an electrode of one of both unit cells and an electrode of the other one of both unit cells, the interconnecting plate including at least one cathode compartment (11) and at least one anode compartment (9) for gas flow to the cathode and anode respectively.

**3.** The high temperature steam electrolysis (HTSE) or fuel cell electric power generation (SOFC) facility according to claim 1 or 2, wherein each heat exchanger (15, 17) is fluidly connected in series to the outlet of both two gas flow compartments of one of both reactors and to the inlet of the two gas flow compartments of the other one of both reactors.

**4.** The high temperature steam electrolysis (HTSE) or fuel cell electric power generation (SOFC) facility according to claim 1 or 2, wherein each heat exchanger (15, 17) is fluidly connected in series to the outlet of a single one of both gas flow compartments of one of both reactors and to the inlet of a single one of the gas flow compartments of the other one of both reactors, the outlet of the other compartment of each reactor being connected to an independent circuit.

**5.** The high temperature steam electrolysis (HTSE) or fuel cell electric power generation (SOFC) facility according to one of the preceding claims, further comprising at least, in its downstream part, two reactors (R3.1, R3.2) fluidly connected in parallel to each other.

6. A high temperature steam electrolysis method implemented by a facility according to one of the preceding facilities, comprising at least the following steps:

   a/ operating in allothermal mode at least in the electrolysis reactors, the most upstream of the facility with a temperature gradient between a fluid inlet and outlet of one of said reactors restricted to a predetermined value $\Delta T$;
   b/ generating heat by the external heat source (14) to provide a temperature increase in the order of the predetermined value $\Delta T$ at least to the fluid exiting from the cathode compartment(s) of a first reactor prior to be introduced into those of the second reactor, provided in series, downstream of the first one.

7. The high temperature steam electrolysis method according to claim 6, wherein the heat gradient value $\Delta T$ predetermined in step a/ is at most equal to 100 K, preferably to 50 K.

8. The high temperature steam electrolysis method according to claim 6 or 7, wherein step a/ is performed so as to have all the electrolysis reactors operating in allothermal mode.

9. The high temperature steam electrolysis method according to claim 6 or 7, wherein step a/ is performed so as to have a part of the reactors, downstream or most downstream, operating in autothermal mode.

10. The high temperature steam electrolysis method according to one of claims 6 to 9, wherein in each electrolysis reactor, a fluid flow (H2O, H2) is carried out in the cathode compartment(s) in co-current with that of the fluid (02, draining gas) in the anode compartment(s).

11. The high temperature steam electrolysis method according to one of claims 6 to 9, wherein in each electrolysis reactor, a fluid flow (H2O, H2) is carried out in the cathode compartment(s) in counter-current with that of the fluid (02, draining gas) in the anode compartment(s).

12. The high temperature steam electrolysis method according to one of claims 6 to 9, wherein in each electrolysis reactor, a fluid (H2O, H2) is carried out in the cathode compartment(s) in cross-current with that of the fluid (02, draining gas) in the anode compartment(s).

13. The high temperature steam electrolysis according to claim 10, wherein in each electrolysis reactor, a fluid flow (H2O, H2) is further carried out in co-current with that of the fluid (02, draining gas) between consecutive reactors.

14. The high temperature steam electrolysis method according to claim 10, wherein of electrolysis, a fluid flow (H2O, H2) is further carried out in counter-current with that of the fluid (02, draining gas) between consecutive reactors.

15. The high temperature steam electrolysis method according to any of claims 6 to 14, wherein the discharge of oxygen produced by each electrolysis reactor is carried out.

$4e^-$

$2H_2O$ Cathode $2H_2$

$2O^{2-}$ Electrolyte

Anode $O_2$

$C_1$

V

$4e^-$

FIG.1

8.1 Interconnecteur

Courant

$H_2 + H_2O$

2.1 Cathode – $H_2$ électrode

6.1 Electrolyte

4.1 Anode – $O_2$ électrode

$H_2O$

$O_2$

$C_1$

Interconnecteur
8.2

2.2
Cathode – $H_2$ électrode

$H_2O$

FIG.2

FIG.3

FIG.4

FIG.5

FIG.6

FIG.7

FIG.8

$R_1$

$C_1$

$C_2$

7

$E_3$

$C_3$

## FIG.9

2.1

8

$H_2O$ → ← $H_2O$

6.1

→ $O_2$

$C_1$

4.1

8

2.2

$C_2$

$O_2$

4.2

## FIG.10

6.2

FIG.11

FIG.12

FIG.13

FIG.14

FIG.15

FIG.16

FIG.17

FIG.18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009040335 A
- US 20040229099 A
- WO 2011003519 A1